# EUROPEAN PATENT APPLICATION

(11) **EP 2 109 334 A2**
(43) Date of publication of application: **14.10.2009**
(21) Application number: 09157403.8
(22) Date of filing: 06.04.2009
(51) Int. Cl.: H04W 16/26

(54) **Wireless communications network comprising multi-hop relay stations**

(30) Priority: 07.04.2008 IL 19065908
(71) Applicant: Alvarion Ltd., 69710 Tel-Aviv (IL)
(72) Inventor: Goldhamer, Mariana, 52282 Ramat Gan (IL)
(74) Representative: Modiano, Micaela Nadia

(57) **Abstract**

A method is provided for conveying wireless communications in a radio network using OFDMA or multicarrier technologies. The wireless network comprises a first relay station and a subscriber station that is operative to communicate with that first relay station. The first relay station is operative to simultaneously transmit to or receive communications from at least two recipients along a shared frequency channel. The two recipients are wireless network entities selected from among: the base station and a subscriber station; or another relay station and a subscriber station; or the base station and another relay station. According to an embodiment of the invention the wireless communications network further comprises a second relay station, which is operative to simultaneously transmit to or receive communications from at least two recipients along a shared frequency channel. The two recipients are wireless network entities selected from among: the first relay station and a subscriber stations, or a third relay station and a subscriber station, or the first relay station and a third relay station, wherein a third relay station is a relay station that does not exchange communications directly with either the base station nor the first relay station.

## Description

### FIELD OF THE INVENTION

The present invention relates in general to telecommunication systems and methods for efficient utilization thereof, and particularly to systems to relay transmissions in wireless networks.

### BACKGROUND OF THE INVENTION

The well known use of relays in wireless networks has gained some further popularity in the recent years with the introduction of broadband systems, having physical limitation of the cell size. Classical relays operate at the radio level, by amplifying the received signal and re-transmitting it, generally at a different frequency. Newer relays, sometimes referred to as Layer 2 relays, decode the signal and re-transmit it at a different point in time.

US 5,883,884 describes a wireless communication system in which a base unit transmits outgoing TDM signals within a base transmission coverage area at a first frequency. Repeaters in the base coverage area receive the outgoing signal and retransmit it within respective repeater coverage areas at respective frequencies, maintaining the same time slot orientation in TDM format, where several levels of repeaters form a hierarchy covering the expanded range. The remote subscriber units located in a coverage area receive the strongest outgoing frequency signal from a repeater/base unit in a time slot assigned to that unit for a particular call. Incoming TDMA signals from remote units use the same time slots used in received outgoing signals. Each repeater receives outgoing signals from a lower level repeater (or from the base unit) at the transmission frequency of the lower level repeater, and immediately retransmits the signal in its own coverage at a different frequency. Incoming signals transmitted to any particular repeater from a remote unit in its coverage area, or from a higher level repeater, are at the outgoing transmission frequency for that repeater. The solution provided by this publication to reduce interruption during communications is that the repeaters and remote units switch between repeaters to communicate with the base unit depending upon received signal strength.

US 7,386,036 discloses a wireless multi-hop system in which radio links between relays and users are optimized separately from the links between relays and base stations and in which multiple simultaneous data streams between relays and base stations are created. The system includes a base station (BS) connected to the core network with a link of wire line quality, relay stations (RS) connected to the BS with a first radio interface, and to subscriber stations (SS), with a second radio interface. The first and second radio interfaces can operate, at least in part, using the same frequency bandwidth, and the SS can also connect directly to the BS using the second radio interface if the BS is closer than any RS.

US 7,218,891 describes a multi-hop relaying method for use in a frequency division duplexing based wireless in a cellular network. The multi-hop transmission scheme utilizes relays within a conventional cellular system by selecting the strongest pilot signal from among the base stations and the relays, reporting such to the base station, distributing an active user list to the relays along with scheduling and routing information via a relay control channel, and transmitting data according to a respective active user based upon the pilot signal strength to maximize coverage and capacity over the cellular system.

Still, it is required to provide an improved solution for spectral efficiency based on the utilization of dedicated as well as shared allocations of resources used while operating under access mode (BS/RS to SS) operation.

### SUMMARY OF THE INVENTION

It is therefore an object of the present invention to provide improved methods and means for using relays in a multi-hop wireless communications network.

It is a further object of the present invention to provide methods for allocating OFDMA/multi-carrier resources to achieve the foregoing.

Other objects of the invention will become apparent as the description of the invention proceeds.

In accordance with an embodiment of the present invention, there is provided a method for conveying wireless communications in a wireless communications network comprising at least one base station, at least one first relay station and a plurality of subscriber stations, and wherein the at least one first relay station is operative to simultaneously transmit communications to or receive communications from at least two recipients along a shared frequency channel and wherein the at least two recipients are wireless network entities selected from among:
- the base station and at least one subscriber station selected from among the plurality of subscriber stations; or
- at least one other relay station and at least one subscriber station selected from among the plurality of subscriber stations; or
- the base station and at least one other relay station.

As will be appreciated by those skilled in the art, the present invention naturally encompasses cases where the at least one first relay station communicates with more than two such recipients in accordance with the method described above. For example, the at least one first relay station may communicate with the base station, with one or more other relay stations and with at least one subscriber station.

According to another embodiment of the invention, the wireless communications network further comprises at least one second relay station, and wherein the at least one second relay station is operative to simultaneously transmit communications to or receive communications from at least two recipients along a shared frequency channel, and wherein the at least two recipients are wireless network entities selected from among:
- the at least one first relay station and at least one subscriber station selected from among the plurality of subscriber stations; or
- at least one third relay station and at least one subscriber station selected from among the plurality of subscriber stations; or
- the at least one first relay station and at least one third relay station,
and wherein the at least one third relay station is not operative to exchange communications directly with either with the base station nor with the at least one first relay station.

In accordance with another embodiment of the invention, at least one member of the group consisting of: the base station, the at least one first relay station and the at least one second relay station, is operative to simultaneously transmit or receive communications directed to/from different recipients by transmitting/receiving the communications along at least one sub-channel selected from among a plurality of OFDMA sub-channels or along at least one sub-carrier selected from among a plurality of sub-carriers.

By yet another embodiment of the invention, the at least one sub-channel or the at least one sub-carrier is used simultaneously by two members of the group consisting of:
- at least two subscriber stations each connected either to a different relay station or connected to a base station and a relay station, or
- a relay station and the base station; or
- two relay stations.

According to still another embodiment of the invention, the transmission and reception intervals for at least one subscriber station to communicate with the base station, and for at least one other subscriber station to communicate with the first relay station, are scheduled at different time intervals.

In accordance with another embodiment of the invention the transmission and reception intervals for at least one subscriber station to communicate with the first relay station and for at least one other subscriber station to communicate with the second relay station, are scheduled at different time intervals.

By still another embodiment of the invention, at least one relay station is operative in accordance with a TDD or FDD modes of operation. Preferably, the at least one relay station is operative during at least one interval while using two different frequency channels for simultaneously transmit or simultaneously receive communications to/from at least two wireless network entities.

### BRIEF DESCRIPTION OF THE DRAWINGS

Fig. 1 illustrates implementation of prior art sub-frame concept for use in a wireless network comprising relays;
Fig. 2 demonstrates areas of interferences to a subscriber station caused by the use of relays;
Fig. 3 illustrates an example for aggressive frequency segment reuse;
Fig. 4 presents usage of dedicated and shared frequency segments in relay operation;
Fig. 5 illustrates operation during time partition 1 - when a relay in an odd hop receives transmissions from its neighbors;
Fig. 6 illustrates operation during time partition 2 when a relay in an odd hop sends transmissions to its neighbors;
Fig. 7 presents a frame structure for IEEE 802.16m relay TDD - according to an embodiment of the invention;
Fig. 8 presents a TDD Frame structure in accordance with another embodiment of the invention;
Fig. 9 illustrates operation in FDD frequency arrangement during time partition 1, when the relays located at odd hops receive transmissions from their respective neighbors and relays in even hops transmit to their neighbors;
Fig. 10 illustrates operation in FDD frequency arrangement during time partition 2, when the relays located in odd hops send transmissions to their respective neighbors and relays in even hops receive from their neighbors;
Fig. 11 presents an FDD Frame structure in accordance with another embodiment of the invention;
Fig. 12 illustrates operation with no interference separation in the time domain; and
Figs 13 to 15 illustrate 3 examples of operation with interference separation in the time domain.

### DETAILED DESCRIPTION OF THE INVENTION

The present invention will be understood and appreciated more fully from the following detailed examples taken in conjunction with the drawings

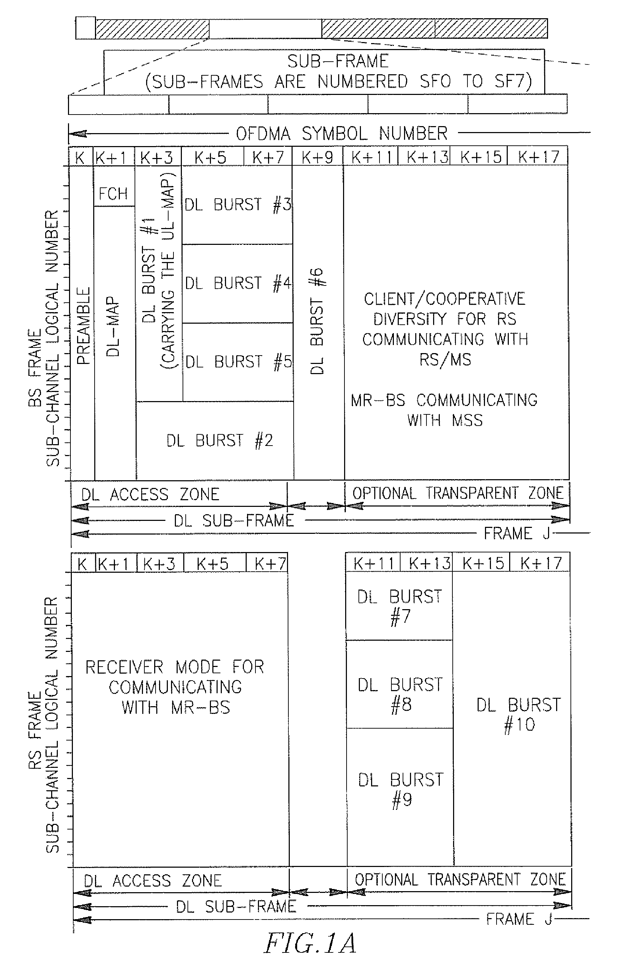

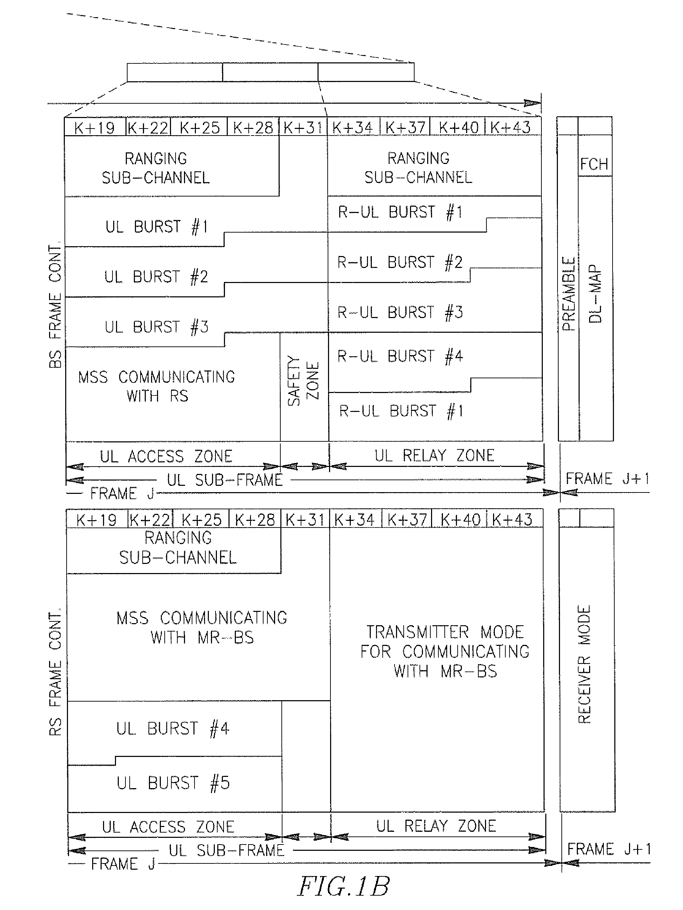

Let us consider now Fig. 1 which presents a representative example of a prior art solution where a communication frame which complies with the draft P802.16j/D3 submitted for the IEEE Recommendation 802.16j, is illustrated as having time division for enabling operation of a relay station. Fig. 1A illustrates the BS part and the relay part of frame J, and Fig. 1B illustrates the continuation of these two parts of frame J. The frame comprises two separated time intervals dedicated to relay-BS communication per MAC frame. However, if such a solution were to be adopted for the IEEE 802.16m System Description Document ("SDD") Recommendation, due to the limitation which stems from the small number of available sub-frames in the IEEE 802.16m SDD such an approach might have serious performance limitations. Additionally, it is highly desired to use the MEMO technology for the RS-BS or RS-RS communications, which would not be applicable if this solution is to be adopted, as the number of possible sub-frames and consequently the zones in a MAC frame is highly limited. Therefore, this solution is practically impossible for incorporating the use MIMO while having a relay allocation of resources.

### Scarcity of sub-frames

As will be appreciated by those skilled in the art, the usage of time separation and the short MAC frame duration impose certain limitations. The limitation, system wise, is generated by having too many features that should be supported in the time domain. Many of these features did not exist at the time when 802.16e was drafted. Some examples of features that are supported by an 802.16e system that evolved to the 802.16m are the following:
- Permutations and Reuse factor:
   - Partial Usage of Channels sub-carrier permutation (PUSC) (Reuse 3)
   - Adjacent sub-carrier permutation (AMC)
   - PUSC with all subchannels permutation (Reuse 1)
- Multicast/Broadcast Zone
- MIMO Zone
   - AMC permutation
   - Diversity permutation
   - Diversity MAP (diversity combined control information sent from multiple antennae)
   - Not-diversity MAP (control information sent from a single antenna)
   - Matrix A (MIMO pre-coding)
   - Matrix B (combined pre-coding)
   - Matrix C (beam-forming pre-coding)
   - 2/3 antennae
- Relays
- Legacy support
- Coexistence with Bluetooth
- Coexistence with 802.11
- Coexistence with UMTS/LTE.

Therefore, the solution provided by a preferred embodiment of the present invention to this problem, is, to transfer part of the time-separated activities into the sub carriers domain (e.g. into the OFDMA domain), as will be further discussed hereinafter.

The relay operation consists of a number (e.g. 4 as illustrated in Fig. 1A) of different time intervals in a single frame. If we were to consider for example a partition of sub-frames with the a frame compatible with the 802.16m SDD Recommendation, the embodiment of the proposed solution would become clearer when taken in conjunction with Fig. 1:
- 3 sub-frames for BS DL (3 * 3 = 9 slots), access mode; includes the forward Relay Station (RS) feeding
- 2 sub-frames for RS-DL (2 * 3 = 6 slots), access mode
- 2 sub-frames for BS-UL (2 * 2 = 4 slots), access mode, for the relay backward traffic
- 1 sub-frame for RS-UL, access mode (2 slots, which is not sufficient, but is the whole resource that remains available).

Such a partition would lead to a poor spectral efficiency, especially in the up-link direction, where the MAC and fragmentation headers of every UL (uplink) transmission take a considerable portion of the 4 available slots in the BS UL operation in the above example. For the relay operation it would become even worse, because there are only two available UL slots. Additionally, due to the excessive segmentations, there are important overheads in both DL (downlink) and UL control messages (MAPs).

The addition of MIMO (multiple-input-multiple-output) Zones suitable for BS-RS communication would therefore become impossible due to the small number of sub-frames (available symbols).

### Interference MAP

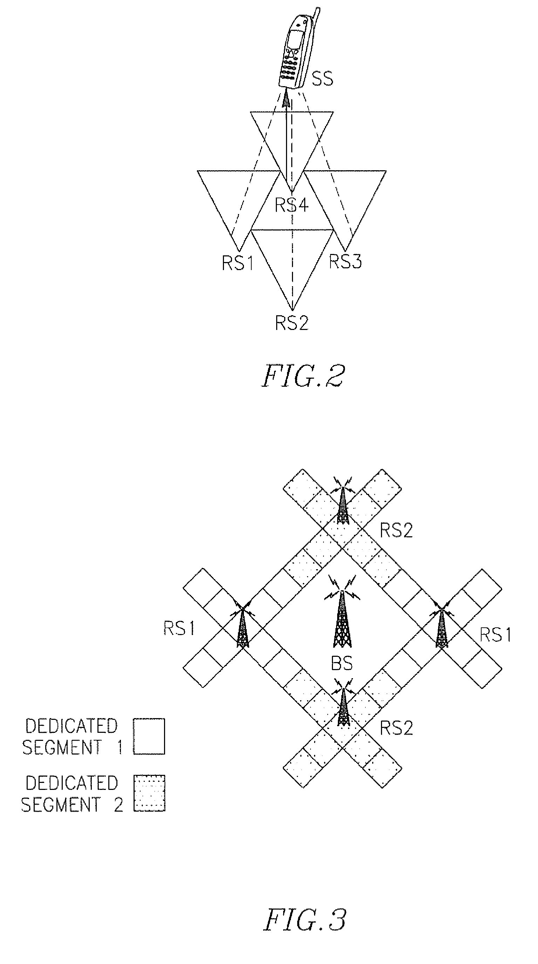

In the general case, a Relay Station (RS) will have a number of RS surrounding it, which, for the highest range and data traffic, should be separated in frequency domain. Let us consider for example a case where Layer 2 relays, (i.e. which decode the signal received and re-transmit it at a different point in time) have sector antennas in the access mode. In such a configuration the interference that would be created to one SS located at the cell edge are illustrated in Fig. 2. If in such an example omni antennas are used, there would be also 4 interfering cells.

The term "frequency segment" as used throughout the specification and claims or "segment" is used to denote a group of sub-channels, whereas the term "sub-channel" is used to denote a logical entity formed by a number of sub-carriers. The sub-carriers may be OFDM/OFDMA sub-carriers or individual carriers.

In order to separate the 4 interfering cells, 4 segments (sub-channel groups) are required in the OFDMA domain. These segments enable the use of a maximum cell size and will be used essentially for increasing the SINR (signal to interference and noise ratio) of specific users, typically those located at the cell's margin. A better spectral efficiency will be obtained if those links which do not interfere to others will be grouped in a "shared" allocation built from sub-channels dedicated for this type of usage.

For example, a possible SDD deployment scenario is illustrated in Fig. 3. This "aggressive" deployment scenario suffers from interference at the intersection of the coverage prints of different relays, which lead to low data rate or lack of coverage.

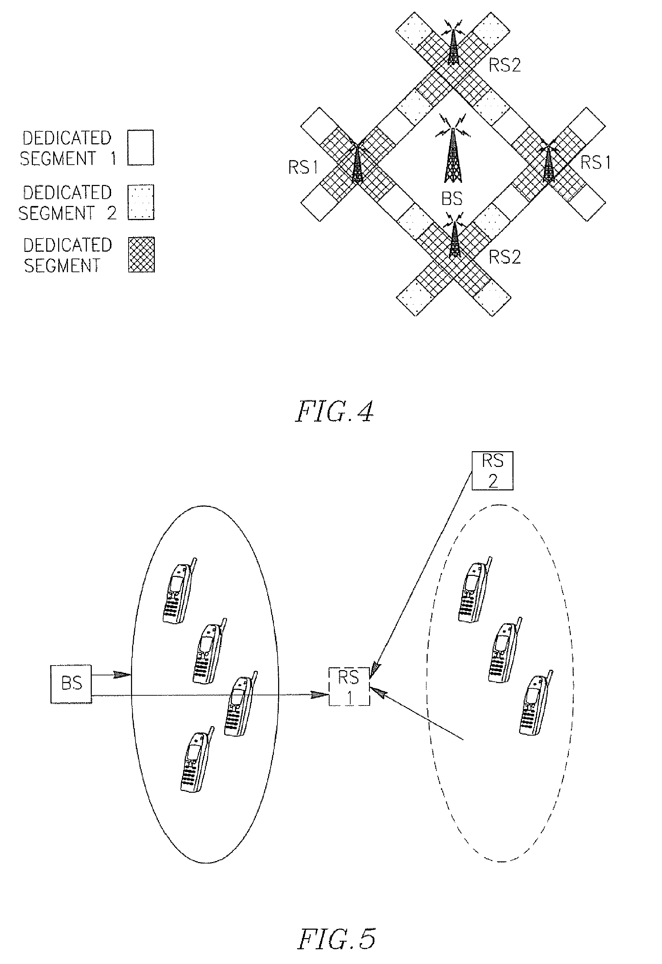

A better spectral efficiency and coverage may be obtained if both dedicated and shared segments are introduced. In Fig. 4 there are areas around the RS cell center which may be reused in parallel. The reused spectrum can be appreciated from the illustration provided in Fig. 4.

If we take the simplified assumption that used spectrum is reflected by the coverage, the use in Fig. 4 is of 9*2=18 squares while in Fig. 3 - 1+1+5=7 squares are used, representing a 18/7 = 250% better spectrum efficiency of the Fig. 4 configuration over that of Fig. 3.

Therefore, as a may easily be understood from the above, the use of the shared segment may significantly increase the spectral efficiency, whereas the use of the dedicated segments will increase the cell size.

### Relay Support in Frame Structure

Let us consider now the following examples illustrating several embodiments of carrying out the present invention.

### Relay operation

The relay access operation is associated with the frequency channel used by the BS, and instead of having the partition between the BS operation and the relay operation in the time domain it is preferably done in the OFDMA domain.

### TDD operation

Typically, a TDD relay will not both transmit (Tx) and receive (Rx) at the same time.

According to some embodiments of the present invention, the MAC entity may communicate with different segments; for example, two time-domain partitions of the 802.16m frame, as follows:

### Time partition 1 (BS-Tx, RS Rx)

This time partition may include the following segments:
- One DL Segment for carrying the BS traffic. This segment will be able to carry at least two different STC (space-time coding)/MIMO modes: one for BS-SS communications and one for BS-RS communications. To accommodate these different STC modes, this segment may preferably be split into two smaller segments, each one using a different STC/MIMO mode. During the BS DL transmissions, the RS is in receiving mode.
- One UL Relay Segment for carrying:
   o Up-link traffic from the subscribers (relay access mode)
   o Backward link of the next hop RS.

This segment may either be split into dedicated and shared sub-channel groups or alternatively different segments may be allocated to the dedicated and shared UL RS traffic. BS downlink traffic may also be scheduled during the shared part of the relay segment, if it does not create interference.

The RS is isolated in the access activity (RS-MS) from the BS due to the different sub-channel segment used and the significant distance between the RS and the BS. The isolation may further be increased by using directional antenna for the relay access operation and the feeding link (BS-RS link).

The functional description of the BS/Relay during time partition 1 is demonstrated in Fig. 5, where the relay is the focal point of the receiving (Rx) activity.

### Time partition 2 (BS Rx, RS Tx)

This time partition may include the following segments:
- BS UL Segment carrying:
   ○ BS access traffic (SS transmissions).
   ○ BS-RS backward link

According to one embodiment of the present invention, this segment may carry at least two different STC modes: one for the BS-SS communications (sub-channel group for the BS access mode) and one for the BS-RS communications. Different sub-channel groups are allocated for this activity.

During the BS UL transmissions, the RS is in transmitting mode.
- DL Relay Segment carrying:
   ○ Downlink RS access traffic to the SSs associated with that RS. This segment may be split into dedicated and shared segments or different segments may be allocated for the dedicated and shared DL RS traffic. The shared segment may also be used by the up-link BS activity as long as it does not create interference to the operation of the relays.
   ○ Forward link to the next hop RS.
      There is interference potential between:
      ○ 1. Transmission of communications from the SS to the BS and the reception of communications sent from the relay to the SS (SS to SS interference);
      ○ 2. Transmission of communications from the SS to the relay and to the BS (SS to BS interference) . This scenario is less problematic, due to the higher separation distance.

The possible isolation for the first scenario is the SS-SS separation (90-100dB in NLOS for 100m) and the segment separation (25dB while using adjacent carriers and 40 dB while using alternate carriers). If the interference is not overcome, the scheduling of the interfering SSs shall be carried out in such a way that they are separated in the time domain, even if the penalty is some delay for such SS. Another possibility could be to schedule the interfering SSs in different frames. Example 2 discussed hereinbelow resolves this potential interference.

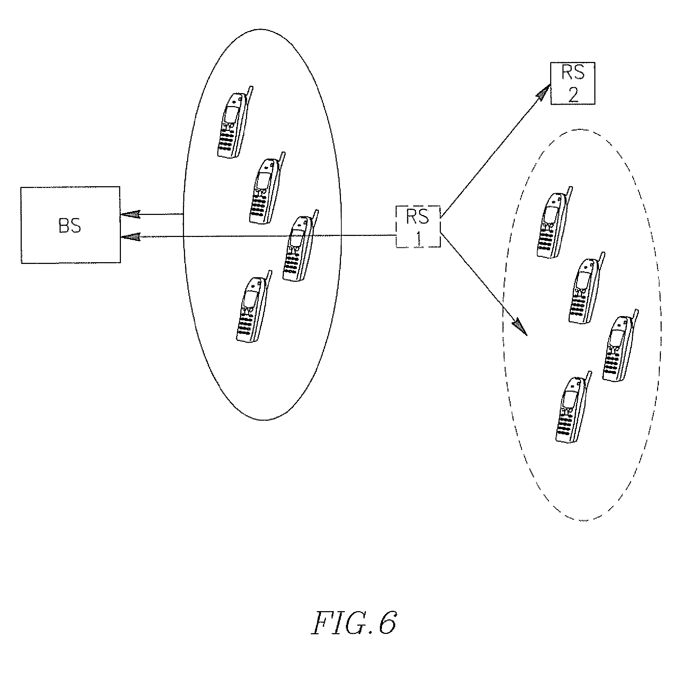

Fig. 6 describes the functional operation during time partition 2. The relay is presented as the central transmitting point.

### Frame structure - Example 1

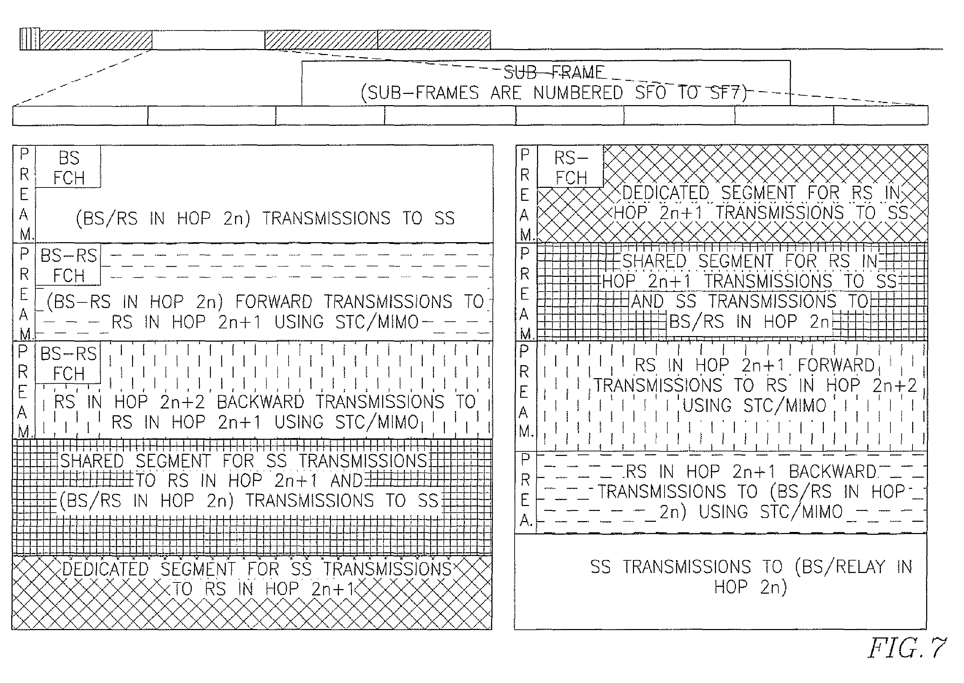

Fig. 7 demonstrates a functional description of the BS/Relay operation according to some embodiments of the present invention. The BS is considered to be located at HOP 0, while the first relay is located at HOP 1. The frame partition starts with the BS DL, which is also relevant for relay stations located at HOP 2n. In Fig. 7 the left time partition corresponds to time partition 1, whereas the right time partition corresponds to time partition 2.

For each functional behavior a segment in the OFDMA domain is allocated.

A relay transmits in two different directions at the same time. Each transmission uses the suitable segments associated with a specific antenna.

UL and DL activities are mixed within the frame. The permutations used for UL and DL are compatible, but not necessary identical.

The Frame Control Header (FCH) is sent in all DL segments which are intended for different MIMO/STC modes or for different antennae. The FCH may be sent at the start of a multi-frame only. Preambles are sent in DL but can be sent also in up-link.

The above described scheme has the advantage of minimizing the number of switching points in the relay operation and allows the same sub-frame duration as in regular TDD operation.

### Frame structure - Example_2

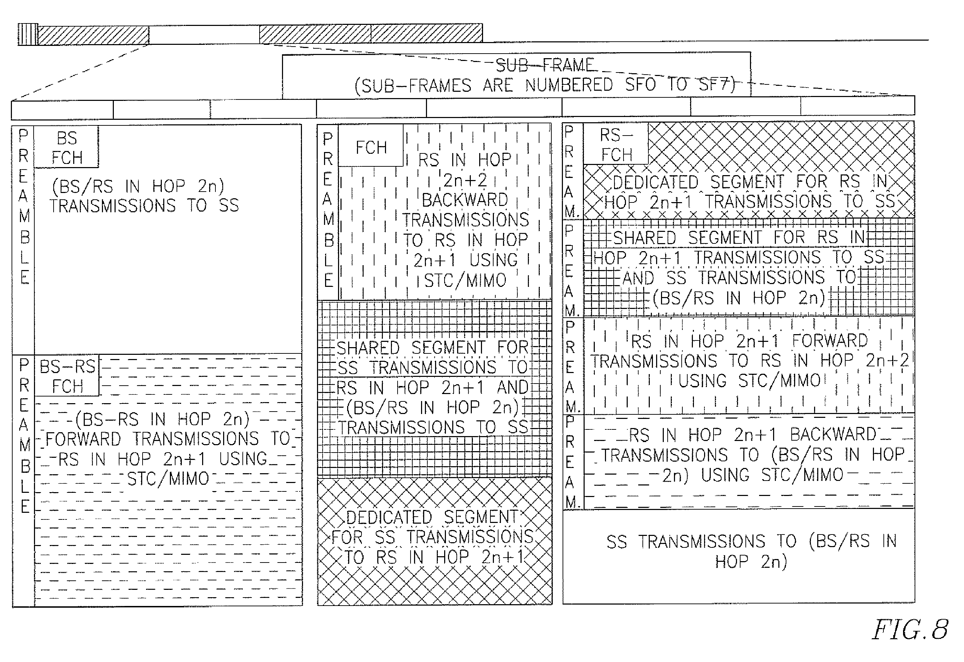

In this example the transmitting activity for BS/RS in HOP 2n is separated in the time domain from the receiving activity of the relay located at HOP 2n+1. Fig. 8 is an example of such a frame structure, in which there is a separation in the time domain of the SS receiving and transmitting activities.

### Multi Hop-operation

The following Table 1 illustrates the multi-hop operation for 6 Hops.

**Table 1 Propagation times**

| Frame 1, BS DL | Frame 1, BS UL | Frame 2, BS DL | Frame 2, BS UL | Frame 3, BS DL | Frame 3, BS UL | Frame 4, BS DL |
|---|---|---|---|---|---|---|
| BS->RS1 | RS1->BS | RS2->RS1 | RS3->RS2 | RS4->RS3 | RS5->RS4 | RS6->RS5 |
| | RS1 -> RS2 | RS2->RS3 | RS3>RS4 | RS4->RS5 | RS5>RS6 | |

As can be seen from the above table, the propagation time from BS to RS6 is only 3 MAC frames.

### FDD operation

The FDD operation makes use of the frequency f1 for Tx of the BS and frequency f2 for Tx of the SS, where typically f1>f2.

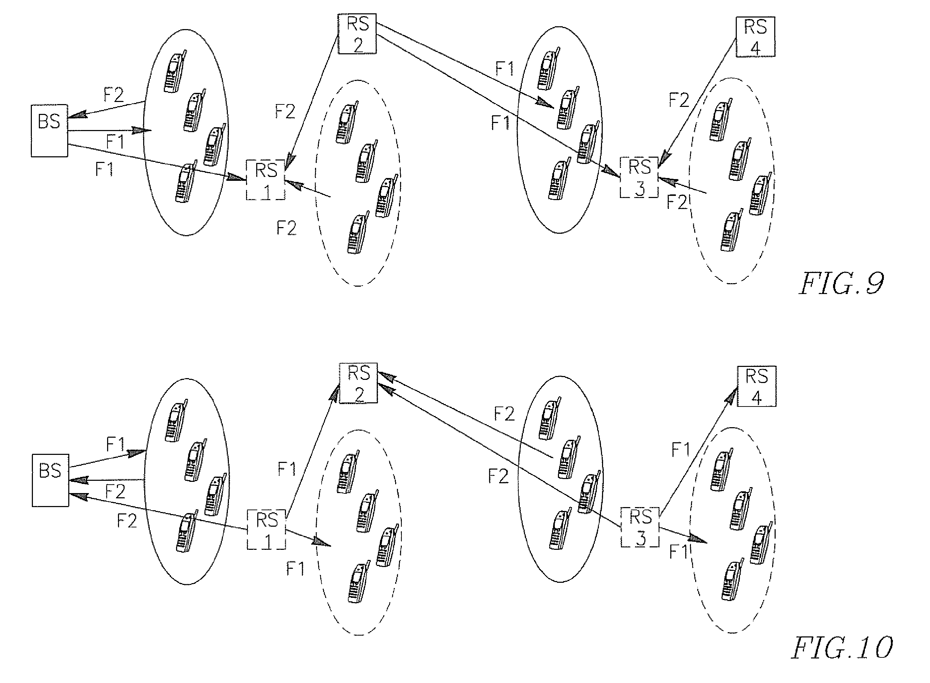

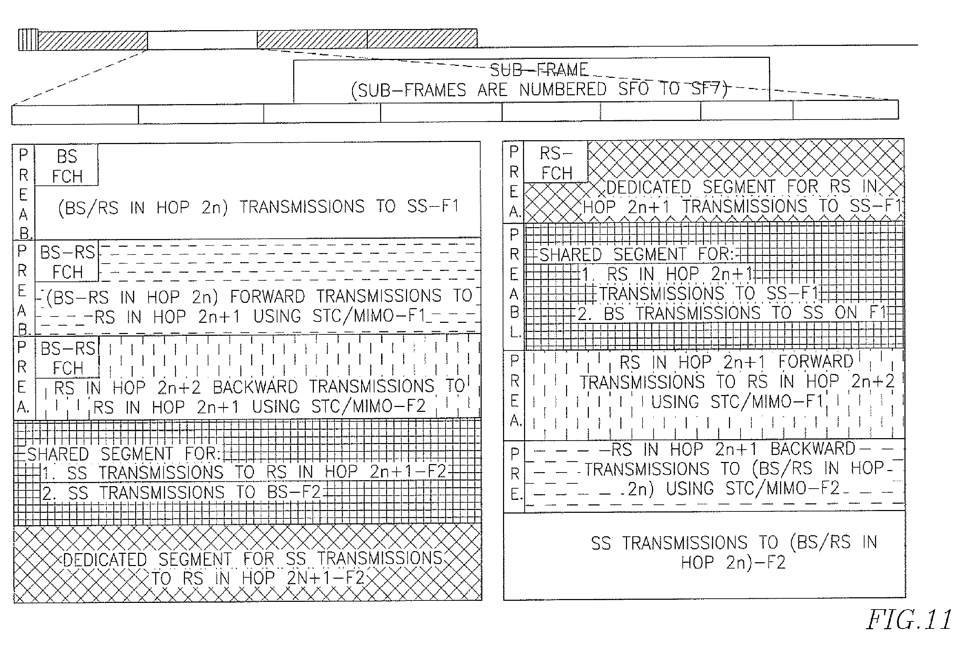

An example of operating in time partition 1 is presented in Fig. 10 whereas operating in time partition 2 is illustrated in Fig. 11.

During time partition 1, the relay may transmit on both f1 and f2, while during time partition 2 the relay receives on both f1 and f2. According to some embodiments of the present invention, a duplexer is not needed, because there is no simultaneous reception and transmission on different frequencies. The time separation for the SS transmission and reception is generally not necessary in FDD mode, because the separation is done in the frequency domain by using different receiving and transmitting frequencies. The BS may operate in a full duplex mode.

### FDD Frame structure

The FDD frame structure is illustrated in Fig. 11. In order to ease the understanding of the reader, the operation on frequency channels f1 and f2 is illustrated by using a common frame structure. However, in practice, the segments which are used only for f1 shall be extended so as to occupy the full channel operating on f1 Similarly, the segments which are used only for f2 shall be extended so as to occupy the full channel operating on f2.

The main advantages of the solution proposed by this embodiment of the present invention are:
- Lower MAC overheads;
- Better granularity for resource allocations (as opposed to the time domain where the resources' allocation is more or less fixed by the sub-frame size and number);
- Support for MIMO in BS-RS communication;
- Significant lower data traffic forward delays. Only one frame is needed for 2 hops; and
- Better spectral efficiency resulting from the usage of "shared segments".

It should be understood that various embodiments of the present invention may relate to any OFDMA/multicarrier based systems such as LTE.

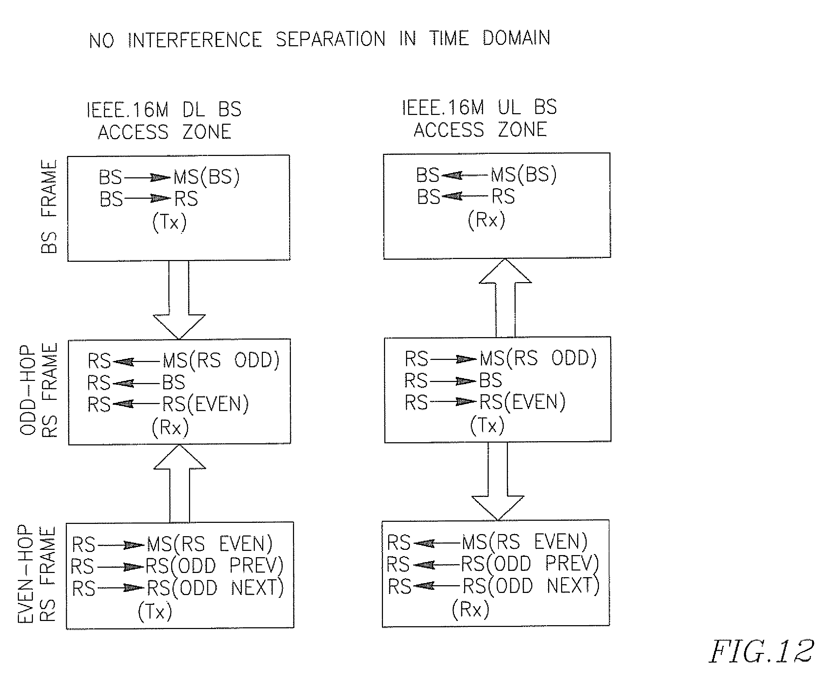

Figs. 12 to 15 demonstrate different concepts of time separation which are helpful for reducing the SS-SS interference, without creating additional time partitions for the relay feeding traffic (BS-RS or RS1-RS2).

In the example presented in Fig. 12 the operation of the BS, RS in odd-hop and RS in even hop on different rows. There are only two time partitions, with a gap corresponding to Tx-Rx or Rx-Tx transition. The MSs may be either in a Tx or Rx state during the same time partition.

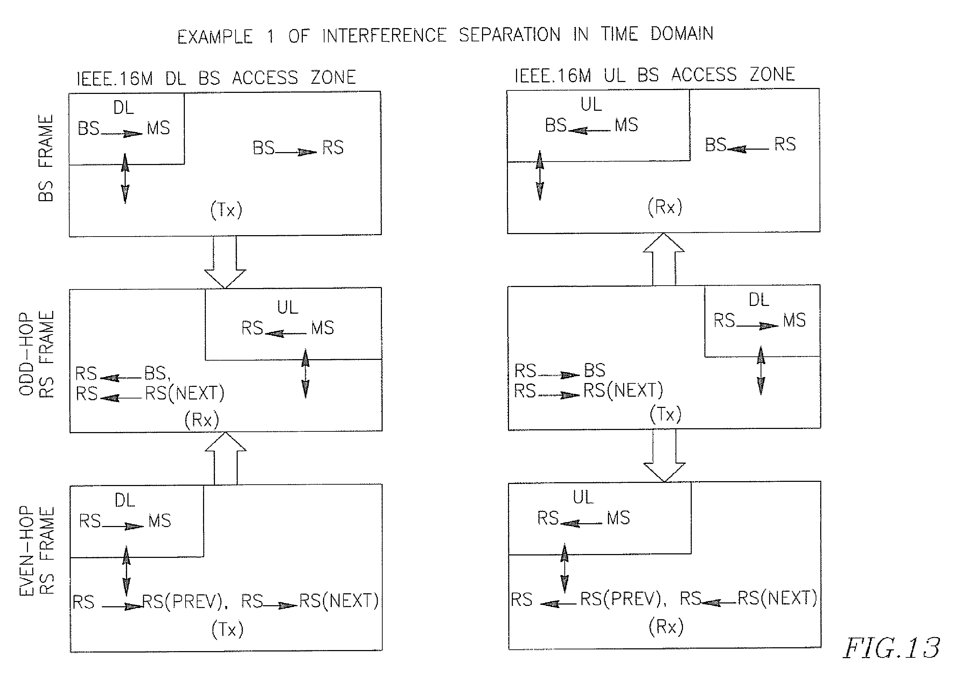

In Fig. 13, the MS transmissions and receptions to/from the BS and RSs can be time separated. The MS connected to BS and RS in even hop, receives traffic at the beginning of the frame (time partition 1), while the transmission of the MS to the RS at odd hop is scheduled after ending the previous receiving activity. In a similar mode, during time partition 2, the MS connected to BS and RS at even hop transmits traffic at the beginning of the frame; the receiving activity of the MS from the RS at odd hop is scheduled after ending the previous transmitting activity. The activity along the feeding link (BS-RS) can take place in parallel with the access activity, having no reciprocal interference.

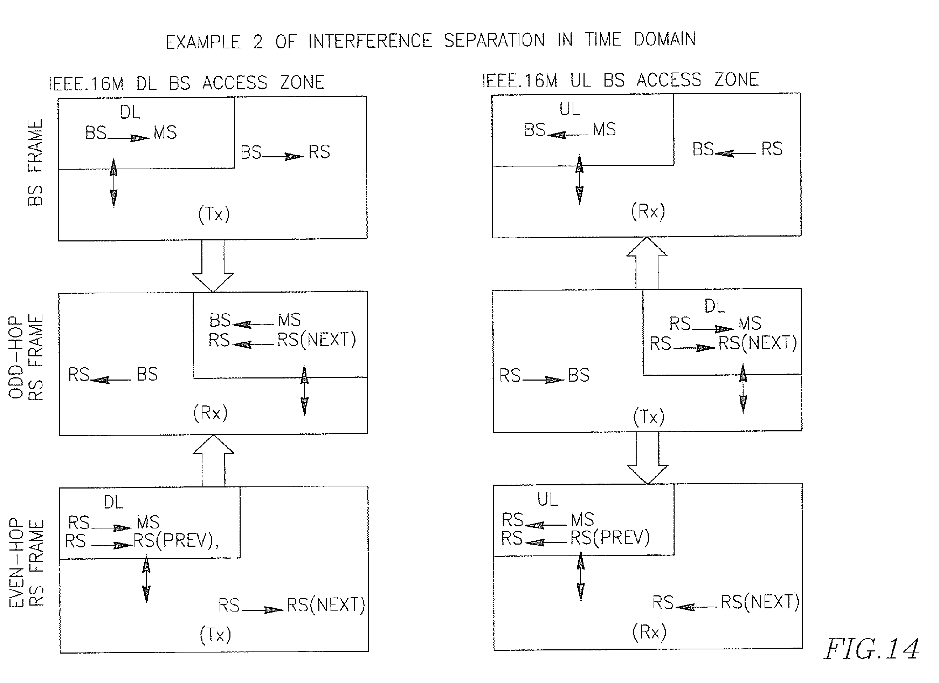

In Fig. 14 the time separation is extended for separating the interfering receiving and transmitting activities of relays in different hops.

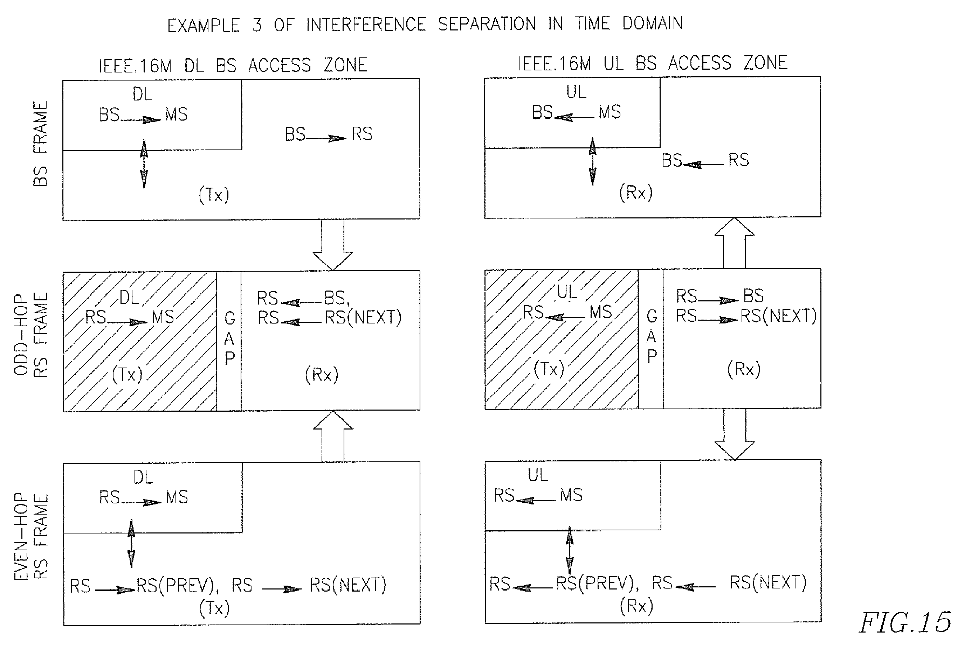

In Fig. 15 the access activities are totally separated from the feeding activities. In addition, the relays and BS transmit to MS at the same time.

Although the present invention has been demonstrated particularly as a solution for IEEE 802.16m, still it should be appreciated by those skilled in the art that the present invention should be understood to encompass all similar systems where OFDMA sub-channel partitions or multi-carriers may be used.

It is to be understood that the present invention has been described using non-limiting detailed descriptions of embodiments thereof that are provided by way of example and are not intended to limit the scope of the invention. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art.

It is noted that some of the above described embodiments describe the best mode contemplated by the inventors and therefore include structure, acts or details of structures and acts that may not be essential to the invention and which are described as examples. Structure and acts described herein are replaceable by equivalents which perform the same function, even if the structure or acts are different, as known in the art. Therefore, the scope of the invention is limited only by the elements and limitations as used in the claims. When used in the following claims, the terms "comprise", "include", "have" and their conjugates mean "including but not limited to"

## Claims

1. A method for conveying wireless communications in a wireless communications network comprising at least one base station, at least one first relay station and a plurality of subscriber stations, and wherein said at least one first relay station is operative to simultaneously transmit communications to or receive communications from at least two recipients along a shared frequency channel and wherein said at least two recipients are wireless network entities selected from among:
- said base station and at least one subscriber station selected from among said plurality of subscriber stations; or
- at least one other relay station and at least one subscriber station selected from among said plurality of subscriber stations; or
- said base station and at least one other relay station.

2. A method according to claim 1, wherein said wireless communications network further comprises at least one second relay station, and wherein said at least one second relay station is operative to simultaneously transmit communications to or receive communications from at least two recipients along a shared frequency channel, and wherein said at least two recipients are wireless network entities selected from among:
- said at least one first relay station and at least one subscriber station selected from among said plurality of subscriber stations; or
- at least one third relay station and at least one subscriber station selected from among said plurality of subscriber stations; or
- said at least one first relay station and at least one third relay station,
and wherein said at least one third relay station is not operative to exchange communications directly with either one of said base station and said at least one first relay station.

3. A method according to claim 1 or 2, wherein at least one member of the group consisting of: said base station, said at least one first relay station and said at least one second relay station, is operative to simultaneously transmit or receive communications directed to/from different recipients by transmitting/receiving said communications along at least one sub-channel selected from among a plurality of OFDMA sub-channels or along at least one sub-carrier selected from among a plurality of sub-carriers.

4. A method according to claim 3, wherein said at least one sub-channel or said at least one sub-carrier is used simultaneously by two members of the group consisting of:
- at least two subscriber stations each connected either to a different relay station or connected to a base station and a relay station, or
- a relay station and said base station; or
- two relay stations.

5. A method according to claim 1, wherein transmission and reception intervals for at least one subscriber station to communicate with said base station, and for at least one other subscriber station to communicate with said first relay station, are scheduled at different time intervals.

6. A method according to claim 2, wherein transmission and reception intervals for at least one subscriber station to communicate with said first relay station and for at least one other subscriber station to communicate with said second relay station, are scheduled at different time intervals.

7. A method according to any of the preceding claims, wherein at least one relay station is operative in accordance with a TDD or FDD modes of operation.

8. A method according to claim 7, wherein said at least one relay station is operative during at least one interval while using two different frequency channels for simultaneously transmit or simultaneously receive communications to/from at least two wireless network entities.
